Europäisches Patentamt

European Patent Office

Office européen des brevets

(19)

(11) Veröffentlichungsnummer: **0 001 410**
**B1**

(12)

# EUROPÄISCHE PATENTSCHRIFT

(21) Anmeldenummer: **78100898.2**

(22) Anmeldetag: **15.09.78**

(51) Int. Cl.³: **F 24 J 3/04, F 28 D 17/00**

(54) Thermischer Kraftspeicher.

(30) Priorität: **06.10.77 DE 2744970**

(43) Veröffentlichungstag der Anmeldung:
**18.04.79 Patentblatt 79/8**

(45) Bekanntmachung des Hinweises auf die Patenterteilung:
**28.01.81 Patentblatt 81/4**

(84) Benannte Vertragsstaaten:
**BE CH FR GB LU NL SE**

(56) Entgegenhaltungen:
**CH - A - 248 161**
**CH - A - 250 843**
**US - A - 3 677 008**
**US - A - 4 024 910**

(73) Patentinhaber: **Messerschmitt-Bölkow-Blohm
Gesellschaft mit beschränkter Haftung
Postfach 801109
D-8000 München 80 (DE)**

(72) Erfinder: **Weissenbach, Bertrand, dr.
Putzbrunnerstrasse 172
D-8000 München 82 (DE)**

EP 0 001 410 B1

Courier Press, Leamington Spa, England.

# 0 001 410

## Thermischer Kraftspeicher

Die Erfindung betrifft einen thermischen Kraftspeicher unter Verwendung einer Niedertemperatur-Wärmequelle, wobei der Speicher mit einer Schüttung aus grobem Material gefüllt ist, durch die Luft ventiliert wird.

Ein bekanntes Verfahren zur Speicherung überschüssiger Energie besteht darin, Wasser in einen hochgelegenen Speicher zu pumpen um dann beispielsweise den Spitzenbedarf an elektrischer Energie decken zu können. Pumpspeicherwerke der genannten Art sind ausführlich in "Stauanlagen und Wasserkraftwerke", H. Press, TL 3 Wasserkraftwerke Berlin 1954 beschrieben. Solche Speicherwerke benötigen allerdings Pumpen, welche das Wasser vom niedrigen zum höheren Niveau hinaufpumpen, Speicherbecken, Ausgleichbecken und Hallen und Anlagen für Pumpen und Turbinenbetrieb.

Gerade in Zonen, in denen tagsüber sehr viel Wärme zur Verfügung steht, sind jedoch natürliche Wasservorkommen nicht ausreichend vorhanden, so daß nach anderen Wegen der Kraftspeicherung gesucht werden muß.

Aus der US—A—4 024 910 ist ein unterirdischer Wärmespeicher bekannt, der mit Steinen gefüllt ist. Die Steine dienen der Absorption der Wärme. Mit Hilfe eines Ventilators kann Luft durch den Wärmespeicher hindurchgeführt werden.

Ebenso ist aus der CH—A—248 161 eine Wärmetauschanlage mit einem unterirdisch angelegten Speicher bekannt. Der Speicher wird aus einem luftdurchlässigen Steinbett gebildet, durch das Luft hindurchgeführt wird.

Aufgabe der Erfindung ist es, einen thermischen Kraftspeicher der genannten Art zu schaffen, bei dem erwärmte Luft als Wärmeträger eingesetzt werden kann und bei dem die Luft zum Laden und Entladen des Speichers durch diesen hindurchführbar ist.

Diese Aufgabe ist gelöst durch wechselweise als Entspanner- und Verdichter arbeitende im oberen und unteren Luftdurchtritt angeordnete mechanisch verbundene Laufräder, welche ihrerseits mit einer als Motor oder Generator arbeitenden Maschine mechanisch verbunden sind.

Vorteilhaft wirkt sich insbesondere aus, daß der erfindungsgemäße thermische Kraftspeicher völlig standortunabhängig ist und auch als Speichersonnenkraftwerk oder Speicherwärmepumpe eingesetzt werden kann.

Die folgende theoretische Energiedichtebetrachtung von Trockenwärmespeichern im Vergleich zu einem Pumpspeicherwerk mit 30 m Nutzgefälle (300 J/dm³ Wasser) soll die Vorteile des Trockenspeichers sinnfällig machen.

Für den zu vergleichenden thermischen Kraftspeicher wurden folgende Daten zugrundegelegt:

| | |
|---|---|
| spez. Wärme der Schüttung | 1500 J/dm.³°K |
| mittlere Speichertemperatur | 200°C |
| Aufwärmspanne | 200°K |

Aus diesen Daten ergibt sich eine thermische Kapazität von 300.000 J/dm³. Die vergleichbare Dichte der potentiellen Nutzenergie erhält man durch Multiplikation mit dem Carnot-Wirkungsgrad.

$$\eta_c = \frac{\Delta T}{T} = \frac{473-300}{473} = 0,36$$

woraus sich eine vergleichbare Dichte der Nutzenergie von 108 000 J/dm³ ergibt.

Die Energiedichten verhalten sich demnach wie 1:360. Damit ist je Speicherinhalt für den thermischen Kraftspeicher auch ein vielfacher Aufwand gegenüber einem Pumpspeicherwerk gerechtfertigt.

Ein Ausführungsbeispiel ist in den Figuren dargestellt und wird im folgenden näher beschrieben. Es zeigen:

Fig. 1 das Prinzipbild eines Trockenspeichers als thermischer Kraftspeicher;

Fig. 2 das Zellentemperaturprofil;

Fig. 3 das PV-Diagramm;

Fig. 4 den Schnitt durch eine mit Solarkollektoren ausgerüstete Anlage.

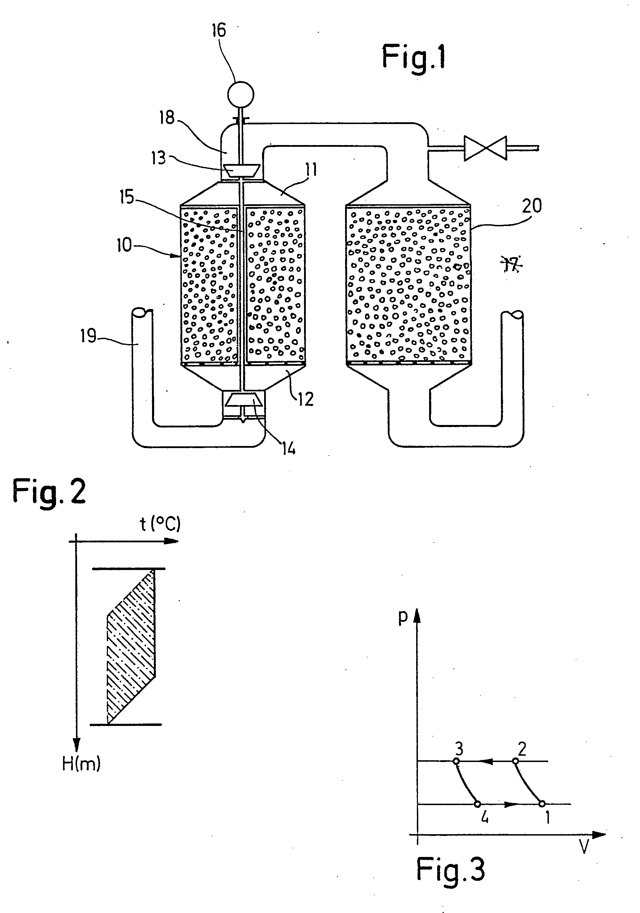

Der Beschreibung des in Fig. 1 dargestellten thermischen Kraftspeichers sei zunächst zum besseren Verständnis eine allgemeine Betrachtung vorausgeschickt.

Bei einem realistischen Anlagenwirkungsgrad von 50% sind von der gespeicherten thermischen Energie etwa 18% nutzbar.

Bei einer Aufwärmspanne von 200°K werden je m³ Luft an Nutzenergie transportiert:

$$c_{p,200} \cdot \delta 200 \cdot \Delta T = 1 \cdot 0,75 \cdot 200 = 150 \ kJ/m^3$$

darin bedeuten:

2

**0 001 410**

$c_{p,200}$ spezifische Wärme bei 200°C in kJ/kg°K
$\delta_{200}$ Dichte bei 200°C in kg/m³
$\Delta_T$ Aufwärmspanne °K

Eine Fördermenge von 1 m³/s entspricht somit einem thermischen Energiestrom von 150 $kW_{th}$ mit einer realistische gesehenen möglichen Krafterzeugung von 150 kW·0,18 = 27 kW.

Bei dem thermischen Kraftspeicher kommt es wesentlich darauf an, den großen Volumenstrom der heißen Luft mit niedrigem Druckabfall zu beherrschen.

Ein mWS Druckabfall würde bereits eine Kompressorleistung von etwa 17 kW erfordern, d.h. die mögliche Krafterzeugung würde über die Hälfte bereits für die Luftumwälzung verbraucht.

Setzt man für die Luftumwälzung ein Limit von 10%, das sind: 2,7 kW je m³/s als tragbar au, so darf der Druckabfall im gesamten Luftkreis nicht mehr als 160 mm WS betragen.

Davon sind abzudecken die Druckabfälle für den Speicher, Verbindungsleitungen und den Wärmetauscher.

Für die weitere Betrachtung wird zur Berücksichtigung des Widerstandes des Speichermaterials gegen den Durchgang der Luft von einem zulässigen Filterwiderstand im Speicher von 60 mm Wassersäule ausgegangen. Rechnet man mit einer zweistündigen Entladezeit des Speichers, so erhält man für einen Mengenstrom der Luft von 1 m³/s eine zugehörige Kapazität von

$$150\ kW_{th}\cdot 2h = 300\ kWh_{th}(0,26\ Gkal)$$

Bei einem spezifischen Speichervermögen von 1500 kJ/m³°K erhält man für eine Aufwärmspanne von 200°K ein zugehöriges Speichervolumen von

$$300\ kWh_{th}/1500\ kJ/m^{3}{}^{\circ}K\cdot 200^{\circ}K = 3,6\ m^{3}.$$

Für die Berechnung der Druckabfälle innerhalb des Speichers werden vorab zwei Überschlagsrechnungen durchgeführt.

Die eine Abschätzung beruht auf dem Gesetz von Darcy, angewendet auf Luft, welches die Zähigkeit nicht berücksichtigt und zu günstige Werte liefert.

Nach diesem Gesetz ist

$$h_L = \frac{1\cdot W}{k}$$

darin bedeuten
$h_L$ Druckhöhe in m Luftsäule
l Filterlänge in m
w Filtergeschwindikgiet in m/s

Setzt man die vorhin angenommenen 60 mm WS Druckabfall ein, so erhält man:

$$h_L = \frac{\delta_w}{\delta_L}\cdot hw = \frac{1000}{0,75}\cdot 0,06 = 80\ m$$

mit
$h_L$ Druckabfall in m Luftsäule
$h_w$ Druckabfall in m Wassersäule
$\delta_l$ Dichte der Luft
$\delta_w$ Dichte des Wassers

Eingesetzt in das Filtergesetz nach Darcy erhält man bei einem Volumen von 50.000 m³ eine flache Tasse mit 12.500 m² bzw. ein Quadrat mit einer Seitenlänge von 110 m und eine zulässige Filtergeschwindigkeit von 2 m/s.

Diese Filtergeschwindigkeit ist sicher zu optimistisch angesetzt. Es wird deshalb eine weitere Abschützung durchgeführt, welche auf dem bekannten Widerstand für Rechteckskanäle mit engem Querschnitt beruht.

Der Staudruck $P_{st}$ ist bei den in Frage kommenden Geschwindigkeiten äußerst klein und beträgt bei 2 m/s

$$P_{st} = \frac{w^2\cdot\delta_1}{2} = 0,75\cdot\frac{4}{2} = 1\cdot 5\ N/m^2 = 1,5\ Pa \approx 0,15\ mm\ WS$$

3

Eine 10-malige Umlenkung mit vollem Verlust der kinetischen Energie würde erst 1,5 mm WS Druckverlust ergeben. So kann angenommen werden, daß der Widerstand im wesentlichen durch die Zähigkeit bestimmt ist.

Für ein enges Rohr gilt die Formel

$$\Delta_p = 32 \cdot \eta \cdot w \frac{1}{d^2}$$

mit

$\Delta p$ Druckabfall in $kp/m^2$
$\eta$ Zähigkeit des Gases in $kp\ s/m^2$
w Strömungsgeschwindigkeit in m/s
l Weglänge in m (Mehrfaches der Filterlänge)
$d^2$ Querschnitt in $m^2$

Entsprechend einer Porösität von 30% wird die Geschwindigkeit auf das 3-fache der Filtergeschwindigkeit gesetzt. Die Weglänge wird gleich der doppelten Filterlänge gesetzt.

Für die Zähigkeit der heißen Luft wird der Wert $1,8 \cdot 10^{-6}\ kp \cdot s/m^2$ aus Tabellen entommen. Einsetzen der Werte ergibt

$$60 = 32 \cdot 1,8 \cdot 10^{-6} \cdot w \frac{1}{d^2}\ \text{bzw.}$$

$$w/d^2 = 130.000\ \text{bzw.}\ d = 5,5\ \text{mm bei}\ w = 4\ \text{m/s}$$

Die notwendige Geschwindigkeit ergibt sich aus der auf den Speicherquerschnitt bzw. den Filterquerschnitt bezogenen erforderlichen Luftmenge wie folgt:

Bei einer Kapazität von

$$50000\ m^3 \cdot 1,5\ MJ/m^3 \cdot {}^\circ K \cdot 200^\circ K = 15\ TJ_{th}$$

und einem spezifischen Wärmetransport von

$$1\ kJ/kg \cdot {}^\circ K = 0,75\ kJ/m^3 \cdot {}^\circ K$$

erhält man bei 2-stündiger Entladezeit einen Gesamtluftstrom von

$$\frac{15 \cdot 10^{12}}{0.75 \cdot 10^3 \cdot 2 \cdot 3600 \cdot 200} = 13900\ m^3/s$$

bei der vorerwähnten angenommen Filterfläche von 12500 $m^2$ ergibt sich daraus eine Filtergeschwindigkeit von 1,11 m/s bzw. eine wahre Geschwindigkeit von ca. 3,3 m/s.

Einsetzen in die Formel für den Druckverlust erhält man bei einer Begrenzung des Druckverlustes auf 60 mm WS einen Mindestdurchmesser des Strömungskanals von 5 mm. Solche Kanalquerschnitte lassen sich durch grobe Schüttungen erreichen.

Für das Auslegungsbeispiel wurde eine Höhe der Übergangzone von 2 m angenommen. Bei einem Wärmeleitvermögen von $0,41\ W/m \cdot {}^\circ K$ ($0,35\ kcal/h\ m \cdot {}^\circ K$) erhält man einen Wärmestrom von

$$= 0,41 \cdot 12500 \cdot 200/2 = 512\ kW_{th}$$

Bei einer Kapazität von 15 $TJ_{th}$ bzw. $4160 \cdot 10^3$ kWh fällt dieser Verlust bei einem Tagesspeicher nicht ins Gewicht. Die Filterlänge könnte demnach noch verkürzt werden.

Die sehr geringe Energiedichte bei Luft als Wärmeträger läßt für den Luftkreislauf nur kurze Wege zu. Wärmeaustauscher oder sonstige Einrichtungen für Ladung und Entladung müssen mit dem Speicher integriert werden.

Der Speicher 10 gemäß Fig. 1 besteht aus flachen Zellen, bei welchen analog einem Aquiferspeicher die Temperatur von oben nach unten abfällt.

Am oberen und unteren Ende 11, 12 des eigentlichen Speichers 10 ist je ein verstellbars Laufrad 13, 14 großen Durchmessers eingebaut, welches mit einer durchlaufenden Welle 15 verbunden ist und abwechselnd jeweils als Turbine oder Verdichter betrieben wird. Am oberen Ende der Welle befindet sich ein als Motorgenerator arbeitende Maschine 16. Der zwischen den beiden Laufrädern befindliche Speicher 10 ist für einen erhöhten Druck ausgelegt, der je nach dem Gewicht der darüber befindlichen Anlagenteile bzw. baulichen Ausführung 2 bis 4 m WS beträgt (1 m WS entspricht einem Gewicht von $10^3$ kg (1 t) je $m^3$.

Beim Laden wird (vgl. Fig. 1) Luft von oben durch den Luftdurchtritt 18 angesaugt, verdichtet und die Wärme anschließend an das Speichermaterial abgegeben. Hierbei wandert eine Temperaturfront innerhalb des Speichers wie in Fig. 2 angedeutet nach unten. Die Temperatur der Luft liegt dabei vor dem unteren Laufrad 14 nahe der Umgebungstemperatur. Nach Entspannen im unteren Laufrad 14 liegt die Lufttemperatur unterhalb der Umgebungstemperatur.

Bei einem Druckverhältnis von 1,2 erhält man ein adiabatisches Temperaturverhältnis von

$$1{,}2^{1-\frac{1}{1{,}4}} = 1{,}053, \text{ d.i. eine Abkühlung um etwa } 15°C.$$

Dadurch wird erreicht, daß die vom Verdichter aufgenommene Energie kliener ist, als die an den Speicher abgegebene Wärme. Beim Entladen wird die Strömungsrichtung umgekehrt und Frischluft von unten durch den Luftdurchtritt 19 angesaugt und verdichtet. Die im Speicher 10 erwärmte verdichtete Luft ergibt dann einen Überschuß an Energie am oberau Laufrad 13.

Fig. 3 zeigt den zugrundeliegenden idealen Gasprozeß im p, V-Diagramm. Laden und Entladen unterscheiden sich nur durch den Umlaufsinn im Diagramm. Erwähnt sei, daß beim Laden vorgewärmte Luft verdichtet wird, um höhere Speichertemperaturen zu erreichen. Der Mehraufwand an zugeführter elektrischer Energie äußert sich in der höheren Speichertemperatur und findet sein Äquivalent in einer erhöhten elektrischen Leistung beim Entladen.

Infolge der unvermeidbaren Maschinenverluste sind die Temperaturen der Luft beim Laden nach der Kompression höher als beim idealen Prozeß. Dies führt dazu, daß nach jedem Ladezyklus die Temperatur in der Regeneratorzelle 20 etwas ansteigt. Hierdurch wird erreicht, daß die Speichertemperatur innerhalb gewisser Grenzen beliebig hoch gelegt werden kann. Da die Verlustwärme der Maschinen auch Nutzenergie enthält, fällt der Gesamtwirkungsgrad der Speicheranlage etwas höher aus, als der durch Multiplikation der Maschinenwirkungsgrade erhaltene Wert.

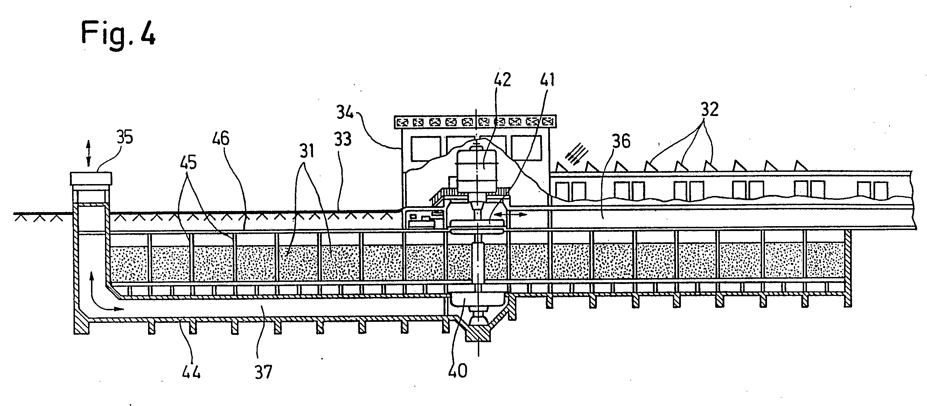

Fig. 4 zeigt exemplarisch den praktischen Einsatz der Erfindung als thermischer Kraft-Trockenspeicher. Auf der Erdoberfläche 33 sind ein Maschinenhaus 34, ein Luftdurchtritt 35 und Solarkollektor 32 angeordnet.

Unterirdisch sind Speicherzellen 31 sowie oberer und unterer Luftschacht 36, 37 untergebracht.

In diesem Beispiel wird in den Solarkollektoren erwärmte Luft als Wärmeträger verwendet. Genau so gut können auch erwärmte Gase von anderen Quellen, beispielsweise Abwärme von Kraftwerken und dergleichen herangezogen werden. Das Arbeitsprinzip der Anlage stimmt völlig mit dem zu Fig. 1 erläuterten überein. Die Laufräder 40, 41 sind wahlweise als Turbine oder Verdichter betreibbar.

Ebenso ist die Maschine 42 entsprechend als Generator oder Motor einsetzbar.

Die Anzahl der Speicherzellen 31 und die Dimensionierung der Solarkollektoren 32 wird je nach den örtlichen Gegebenheiten aufeinander abgestimmt. Die gesamte Anlage wird in Stahlbeton ausgeführt, so daß auch die Tragfähigkeit der Schächte, Decke, Zwischenwände 44, 45, 46 usw. gewährleistet ist.

**Patentansprüche**

1. Thermischer Kraftspeicher unter Verwendung einer Niedertemperatur-Wärmequelle, wobei der Speicher (10) mit einer Schüttung aus grobem Material gefüllt ist, durch die Luft ventiliert wird, gekennzeichnet durch wechselweise als Entspanner- und Verdichter arbeitende im oberen und unteren Luftdurchtritt (18, 19) angeordnete mechanisch verbundene Laufräder (13, 14) welche ihrerseits mit einer als Motor oder Generator arbeitende Maschine (16) mechanisch verbunden sind.

2. Thermischer Kraftspeicher nach Anspruch 1, dadurch gekennzeichnet, daß dem Speicher (10) eine Regeneratorzelle (20) vorgeschaltet ist.

3. Thermischer Kraftspeicher nach Anspruch 2, dadurch gekennzeichnet, daß die Regeneratorzelle (20) eine Schüttung aus grobem Material aufweist.

4. Thermischer Kraftspeicher nach einem der vorhergehenden Ansprüche, dadurch gekennzeichnet, daß die Schüttung Kanalquerschnitte von mindestens 5 mm Durchmesser aufweist.

5. Thermischer Kraftspeicher nach einem der vorhergehenden Ansprüche, dadurch gekennzeichnet; daß Speicherzellen (31) parallel geschaltet sind.

6. Thermischer Kraftspeicher nach einem der vorhergehenden Ansprüche, dadurch gekennzeichnet, daß die von Solarkollektoren (32) erwärmte Luft als Wärmeträger in die Speicherzellen (31) führbar ist.

**Claims**

1. A thermal power storage using a low temperature heat source, the storage (10) being filled with coarse material through which air is being ventilated characterized by mechanically linked running wheels (13, 14) functioning alternately as decompressors and compressors in the upper and lower air ducts (18, 19). The wheels in turn are mechanically linked to an engine (16) functioning as a motor or generator.

2. A thermal power storage according to Claim 1 characterized by a regenerator cell (20) connected to the storage.

3. A thermal power storage according to Claim 2 characterized by the regenerator cell (20) being filled with coarse material.

4. A thermal power storage according to one of the preceding claims characterized by the fill having channels with a minimum diameter of 5 mm.

5. A thermal power storage according to one of the preceding claims characterized by the storage cells (31) being parallel connected.

6. A thermal power storage according to one of the preceding claims characterized by the air heated by the solar collectors (32) being conductible into the storage cells (31) as heat carrier.

**Revendications**

1. Accumulateur d'énergie thermique utilisant une source de chaleur à basse température. Le corps accumulateur (10) est rempli d'un agrégat à gros grain traversé par un courant d'air ventilé. Caractérisation:deux rotors (13, 14) disposés aux traversées d'air supérieure et inférieure (18, 19) sont mécaniquement reliés entre eux et fonctionnent alternativement en turbine ou en pompe. Les deux rotors sont à leur tour reliés mécaniquement à une machine (16) fonctionnant alternativement en moteur ou en générateur électrique.

2. Accumulateur d'énergie thermique suivant spécification 1. Caractérisation: une cellule regénératrice (20) est disposée en amont de l'accumulateur (10).

3. Accumulateur d'énergie thermique suivant spécification 2. Caractérisation: la cellule régénératrice (20) est remplie d'un agrégat à gros grain.

4. Accumulateur d'énergie thermique suivant une des spécifications précédentes. Caractérisation: les canaux de passage d'air dans l'agrégat ont un diamètre minimum de 5 mm.

5. Accumulateur d'énergie thermique suivant une des spécifications précédentes. Caractérisation: mise en parallèle de cellules accumulatrices (31).

6. Accumulateur d'énergie thermique suivant une des spécifications précédentes. Caractérisation: l'air chauffé par les collecteurs solaires peut servir de fluide caloporteur traversant les cellules accumulatrices (31).

# Fig.1

# Fig.2

# Fig.3

Fig. 4